# EUROPEAN PATENT APPLICATION

(11) **EP 1 266 812 A2**
(43) Date of publication of application: **18.12.2002**
(21) Application number: 02254185.8
(22) Date of filing: 14.06.2002
(51) Int. Cl.: B60T 7/06

(54) **Pedal supporting structure for vehicle**

(30) Priority: 15.06.2001 JP 2001181244
(71) Applicant: FUJI JUKOGYO KABUSHIKI KAISHA, Tokyo (JP)
(72) Inventor: Matumoto, Yasuaki, Shinjuku-ku, Tokyo (JP); Hatakenaka, Hideaki, Shinjuku-ku, Tokyo (JP)
(74) Representative: W.P. Thompson & Co.

(57) **Abstract**

A pedal supporting structure includes a pedal bracket secured at a front end thereof to a dash panel and secured at a rear end thereof to a support beam, a pedal shaft for swingably supporting a pedal arm and a pressure member disposed in front of the pedal shaft. When an external force larger than a specified value is exerted, a front part of the pedal bracket is constituted to be more easily deformed than other parts of the pedal bracket. When the front part of the pedal bracket is deformed, the pressure member presses the pedal shaft in a backward direction. As a result, the pedal shaft is disengaged from the pedal bracket due to a relative displacement between the pedal shaft and the pedal bracket.

## Description

### BACKGROUND OF THE INVENTION

### 1. Field of the invention

The present invention relates to a structure for supporting pedals such as a brake pedal, a clutch pedal and the like of a vehicle and more particularly to a structure for supporting pedals for restricting an invasion of the pedals into a passenger compartment when an impact load is exerted on a front part of the vehicle.

### 2. Discussion of prior art

With respect to known pedal supporting structures for vehicles, there is a technique disclosed in EP 659615A1 in which a pedal arm is rotatably supported at an upper end thereof by a pedal bracket. The pedal bracket is constituted by a pair of L-shaped arm members disposed opposite to each other in a transverse direction. The paired arm members are separated from each other at the left and right middle portions thereof and the pedal arm supporting section is formed between the paired arm members. Further, the rear parts of the arm members gradually come close to and finally contact each other. The upper end of the pedal arm is constituted so as to be disconnected from respective bearing sections provided on the respective pedal arm supporting sections.

In such a pedal supporting structure, when an external force is applied to a vehicle from a front side, the entire arm members are deformed and a middle portion thereof widens left and right. As a result, the pedal arm is disconnected at the upper end thereof from the bearing sections. Thus, the pedal is prevented from coming into a passenger compartment in the event of a collision of the vehicle.

However, since the pedal bracket, namely the paired arm members, are deformed such that a gap between the arm members widens left and right, a predetermined space for deformation of the pedal bracket must be ensured in the neighborhood of the pedal bracket, especially in a transverse direction of the vehicle, thus restricting the design and layout of the surrounding components of the pedal bracket. Further, in the event of a collision of the vehicle, there is a possibility that the upper end of the pedal arm would not come out of either of the bearing sections.

### SUMMARY OF THE INVENTION

It is an object of the present invention to provide a pedal supporting structure in which the pedal can be reliably disconnected from a pedal bracket to avoid injuries to occupants when an impact load is applied to a front part of a vehicle.

To attain the object, the pedal supporting structure comprises a pedal arm, a first body member being displaced in a backward direction of the vehicle when an external force larger than a specified value is applied to a front part of the vehicle, a second body member hard to be displaced when the external force is applied to the front part of the vehicle, a pedal bracket secured at a front end thereof to the first body member and secured at a rear portion thereof to the second body member so as to displace the front end versus to the rear portion, a pedal shaft mounted on the pedal bracket for swingably supporting one end of the pedal arm and a pressure member provided in front of the pedal shaft and projecting from the front end of the pedal bracket in a direction of the pedal shaft so as to generate a relative displacement between the pedal shaft and the pedal bracket by pressing the pedal shaft in a backward direction of the vehicle and to disengage the pedal shaft from the pedal bracket when the external force is applied.
By way of example only, specific embodiments of the present invention will now be described, with reference to the accompanying drawings, in which:-
Fig. 1 is a side view showing a pedal supporting structure for a vehicle according to an embodiment of the present invention;
Fig. 2 is a sectional view showing a pedal supporting structure for a vehicle according to an embodiment of the present invention;
Fig. 3 is a side view showing a relationship between a separation hole and a pedal shaft of a pedal supporting structure according to an embodiment of the present invention;
Fig. 4 is an explanatory view showing displacements of respective components of an embodiment of the present invention when an external force is inputted;
Fig. 5 is a side view showing a relationship between a separation hole and a pedal shaft of a pedal supporting structure according to an embodiment of the present invention when an external force is inputted;
Fig. 6 is an explanatory view showing displacements of respective components of an embodiment of the present invention when an external force is inputted;
Fig. 7 is a top view showing a variation of a pedal supporting structure; and
Fig. 8 is a side view of a pedal supporting structure shown in Fig. 7.

### DESCRIPTION OF PREFERRED EMBODIMENT

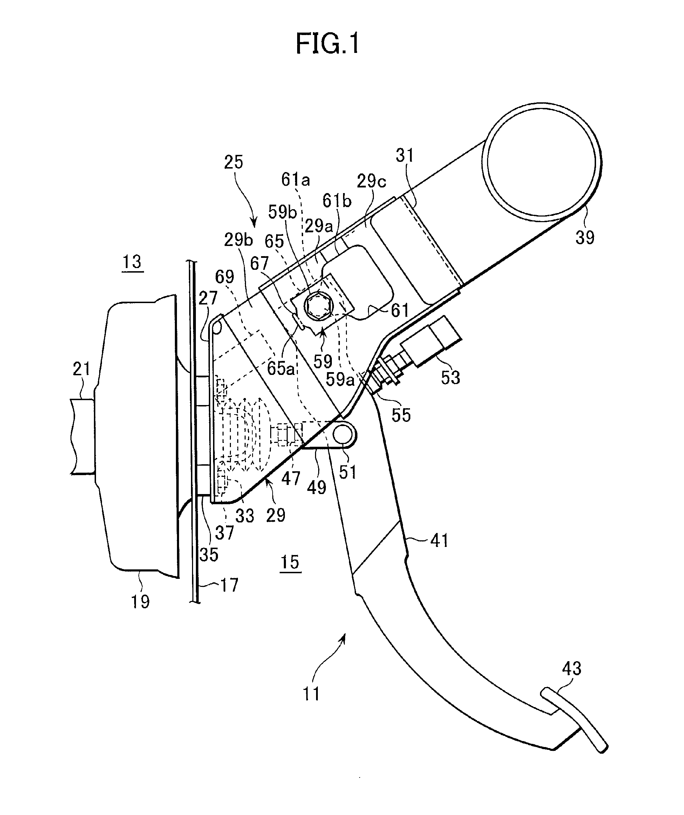

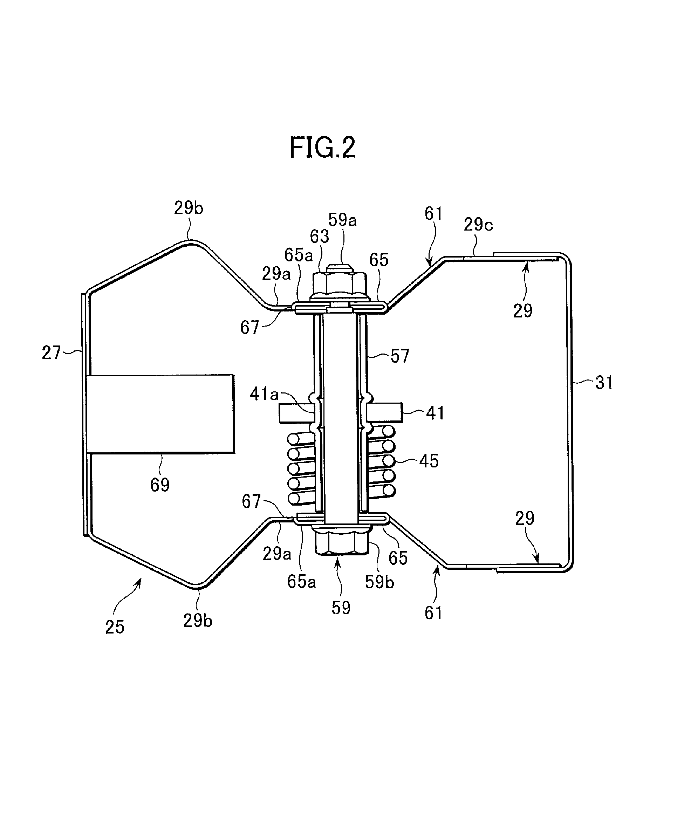

Referring now to Figs. 1 and 2, reference numeral 11 denotes a suspended type brake pedal, reference numeral 13 denotes an engine room and reference numeral 15 denotes a passenger compartment. As shown in Fig. 1, the engine room 13 is separated from the passenger compartment 15 by a dash panel (toe board) 17 rising vertically upwards. The dash panel 17 as a first vehicle member is displaced in a backward direction of a vehicle, when an external force larger than a specified value is applied to a front part of the vehicle. A brake booster 19 for boosting the driver's braking effort, a master cylinder 21 for converting the boosted pressure into hydraulic pressure and a reservoir tank (not shown) for reserving and supplying brake fluid according to volumetric changes of a hydraulic system, are integrally disposed in front of the dash panel 17. Further, a pedal bracket 25 for swingably supporting the brake pedal 11 is disposed behind the dash panel 17.

As shown in Fig. 2, the pedal bracket 25 comprises a front panel 27 constituting a bearing surface on the dash panel 17, a pair of side panels 29, 29 rearwardly extending from both ends of the front panel 27 in parallel with each other and a rear panel 31 for integrally connecting both side panels 29, 29. The pedal bracket 25 is fixed at the front portion thereof to the dash panel 17 and is further fixed at the rear portion thereof to a support beam 39 which will be described hereinafter.

A plurality of stud bolts 33 extend rearwardly from the brake booster 19 and penetrate through respective cylindrical collars 35 secured to the front panel 27 of the pedal bracket 25. The front panel 27 is fixed to the dash panel 17 by screwing nuts 37 onto the stud bolts 33 in such a condition that the collars 35 abut against the dash panel 17.

The rear panel 31 of the pedal bracket 25 is secured to a support beam (instrument panel reinforcement) 39 disposed behind the dash panel 17 and serving as a second vehicle member hard to displace when an external force is inputted. The support beam 39 extending in a transverse direction of the vehicle is fabricated of high strength material.

The brake pedal 11 of the suspended type is disposed between the paired side panels 29, 29. The brake pedal 11 comprises a pedal arm 41 cut off from sheet stock and bent appropriately and a pedal pad 43 provided at the lower end of the pedal arm 41 and to which the driver's braking effort is given. The pedal arm 41 is provided with a return spring 45 constantly biased in a direction to return the brake pedal 11 to an initial position.

The pedal arm 41 of the brake pedal 11 is connected at the middle thereof with a tip portion of a push rod (operating rod) 47 projecting from the brake booster 19 and passing through the dash panel 17. Describing more in detail, a U-shaped or bifurcated clevis 49 is attached to the tip portion of the push rod 47. The pedal arm 41 is inserted into a bifurcated portion of the clevis 49 and a clevis pin 51 penetrates the bifurcated portion of the clevis 47 and the pedal arm 41 so as to allow a free rotation of the push rod 47. The clevis pin 51 is prevented from being dislocated from the clevis 49 by snap rings, stopper pins and the like. Further, a contact point 55 for contacting a brake switch 53 is provided on the middle part of the pedal arm 41.

The pedal arm 41 of the brake pedal 11 is secured to a cylindrical pedal boss 57 extending in a transverse direction of a vehicle at an upper end thereof. The pedal boss 57 is tightly fitted to a through hole 41a formed at the upper end of the pedal arm 41 so as to integrally rotate with the pedal arm 41. The brake pedal 11 is swingably supported by a pedal shaft 59 which is inserted to the pedal boss 57. A bush is inserted over both ends of the pedal boss 57, respectively and the pedal shaft 59 is inserted to these bushes.

The pedal shaft 59 has a bolt like configuration and includes a male thread section 59a and a head section 59b. The pedal shaft 59 is disposed across the paired side panels 29, 29 of the pedal bracket 25 and is mounted on the pedal bracket 25 by screwing a nut 63 onto the male thread section 59a through respective separation slots 61, 61 formed on both side panels 29, 29 from outside of one side panel 29.

As shown in Fig. 2, the paired side panels 29, 29 are constituted by an intermediate section 29a on which the pedal shaft 59 is mounted, a front side section 29b located at the front of the intermediate section 29a, and a rear side section 29c located behind the intermediate section 29a. The distance between the side panels 29, 29 in the intermediate section 29a is established at a value smaller than a length of the male section 59a of the pedal shaft 59. The front side section 29b has an L-shaped collapsible portion bent outwardly so as to collapse more easily than the intermediate section 29a and the rear side 29c when an external force larger than a specified value is applied to the front panel 27 of the pedal bracket 25. The distance between the side panels 29, 29 is established at a value longer than that of the pedal shaft 59.

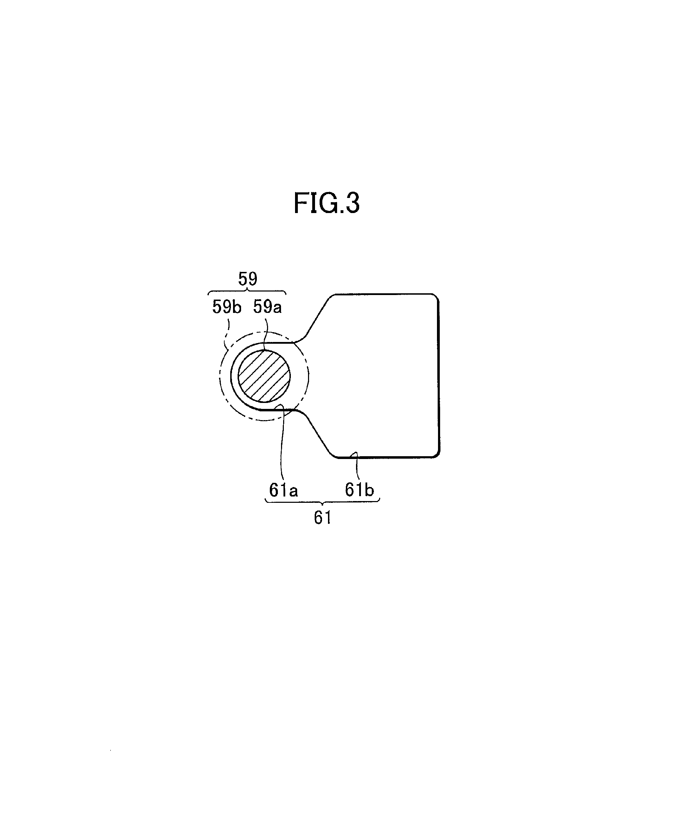

As shown in Fig. 3, the separation slot 61 is formed over the range from the intermediate section 29a to the rear side section 29c of the respective side panels 29, 29 and is constituted by a narrow width section 61a having a narrow opening width and a broad width section 61b having a broad opening width . The opening width of the narrow width section 61a is established such that the male thread section 59a of the pedal shaft 59 can pass therethrough but the head section 59b can not. The opening width of the broad width section 61b is established such that the head section 59b can pass therethrough.

Accordingly, in the case where the pedal shaft 59 is located at the narrow width section 61a of the separation slot 61, the pedal shaft 59 is in a connected relationship with the paired side panels 29, 29 of the pedal bracket 25 respectively. On the other hand, when the pedal shaft 59 is relatively displaced in a backward direction of the vehicle, the pedal shaft 59 reaches the broad width section 61b and comes out of the separation slot 61.

When the pedal shaft 59 is mounted on the paired side panels 29, 29 through the narrow width section 61a of the separation slot 61, a slider member 65 is installed together with the pedal shaft 59 on the respective side panels 29, 29. Describing in more detail, the slider member 65 is bent into a U-shaped configuration so as to interleave the side panel 29 in between at the narrow width section 61a. Further, the slider member 65 has a pawl section 65a engageable with a slot section 67 formed at the front of the separation slot 61 on the intermediate section 29a of the side panel 29. The pawl section 65a is deformed and comes out of the slot section 67 when a load larger than a specified value is applied thereto as a result of a relative deformation of the pedal shaft 59 in a backward direction of the vehicle.

Further, a pressure member 69 extending backwardly is fixed to the front panel 27 of the pedal bracket 25. Since the pressure member 69 is located at the front of the pedal shaft 59, when the front side section 29b of the side panel 29 is deformed by a predetermined quantity by a load larger than a specified value applied from outside, the pressure member 69 abuts against the upper part of the pedal arm 41 and presses the pedal shaft through the pedal arm 41 and the pedal boss 57.

Describing an operation and effect of the embodiment, as shown in Figs . 1 and 2, when a braking operation is not performed, the brake pedal 11 is held at an initial position by the biasing force of the return spring 45. When an occupant applies a depressing ce to the pedal pad 43 of the brake pedal 11, the brake pedal 11 (pedal arm 41) swings forwardly around the pedal shaft 59 and the push rod 47 is pressed in a forward direction of the vehicle. The depressing force applied to the pedal pad 43 of the occupant is transmitted to the brake booster 19 and is boosted therein. After being boosted, the depressing force is converted into fluid pressure by the master cylinder 21.

When an external force larger than a specified value is applied to the front part of the vehicle in the event of collision and the like, the external force is sometimes input to the dash panel 17 through the master cylinder 21 and the brake booster 19. In this case, the dash panel 17 is displaced in a backward direction of the vehicle.

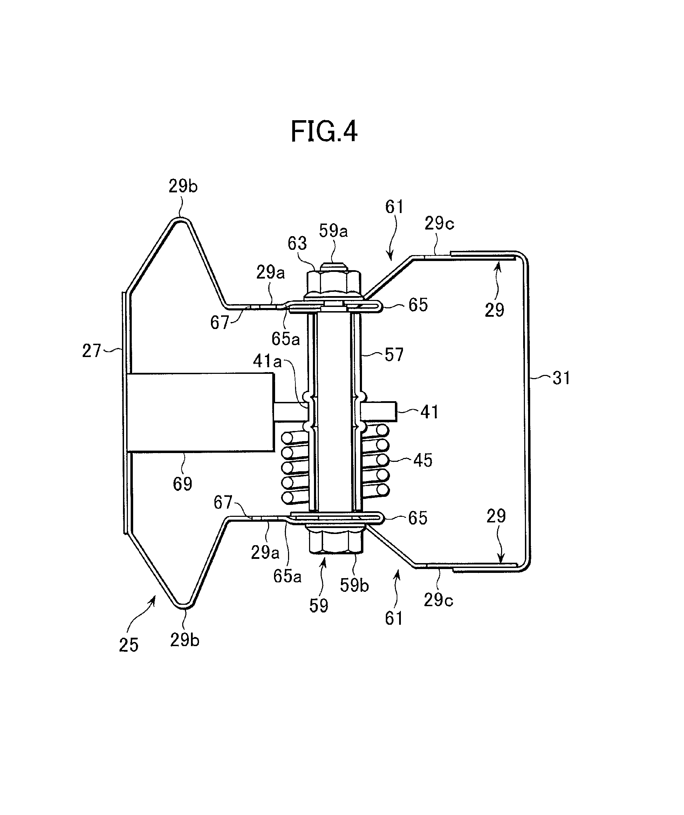

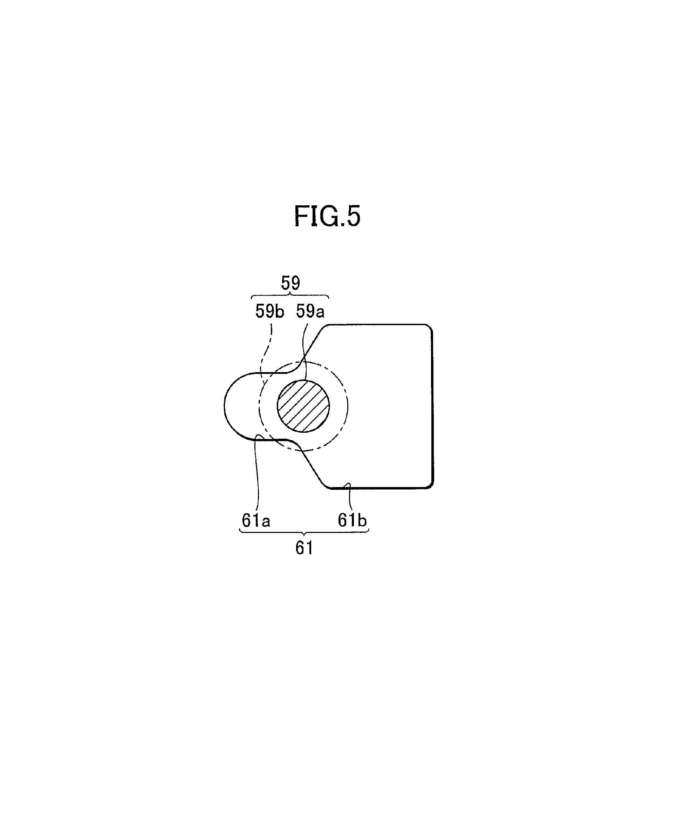

As shown in Figs. 4 and 5, when the dash panel 17 is displaced in a backward direction of the vehicle, the front panel 27 of the pedal bracket 25 is displaced backward together with the dash panel 17. On the other hand, since the rear panel 31 is fixed to the support beam 39, the rear panel 31 never travels in a backward direction of the vehicle. Hence, the pedal bracket 25 is deformed at the front side section 29b of the paired side panels 29 and the pressure member 69 is displaced in the backward direction of the vehicle to abut against the upper end of the pedal arm 41. As a result, the pedal shaft 59 is pressed by the pressure member 69 in the backward direction of the vehicle. When the pedal shaft 59 is pressed by the pressure member 69, there occurs a relative displacement between the pedal bracket 25 and the pedal shaft 59 and the pedal shaft 59 is displaced from the narrow width section 61a of an initial mounting position in a backward direction of the vehicle (see Fig. 5). At this moment, the pawl section 65a of the slider member 65 is deformed to come out of the slot section 67 and the slider member 65 is displaced in the backward direction of the vehicle together with the pedal shaft 59 while the slider member 65 interleaves the narrow width section 61a in the intermediate section 29a of the side panel 29.

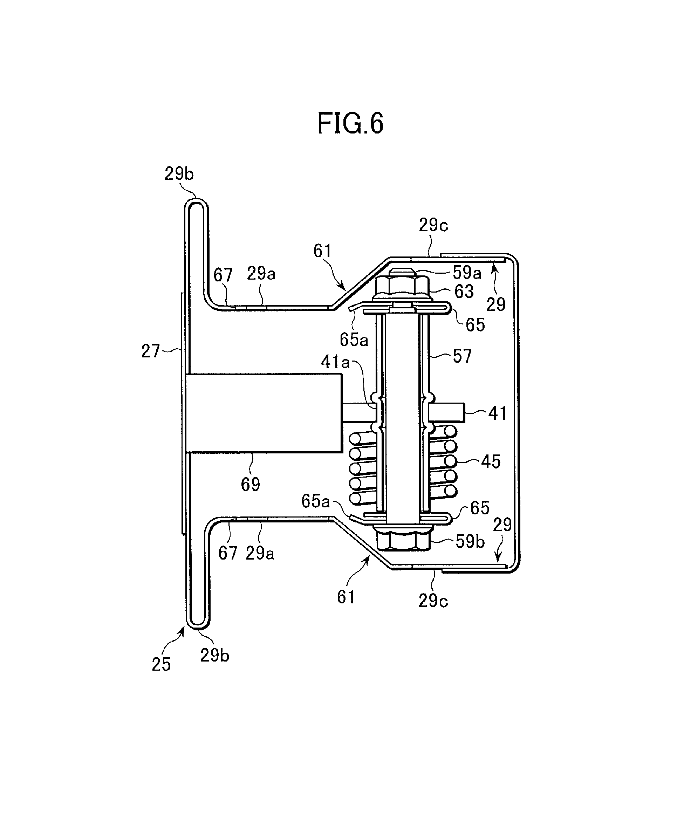

When the dash panel 17 is displaced further in the backward direction of the vehicle, as shown in Fig. 6, the pedal shaft 59 is relatively displaced up to the broad width section 61b by the pressure of the pressure member 69 and is separated from the pedal bracket 25. When the pedal shaft 57 separates from the pedal bracket 25, the brake pedal 11 rotates about the connecting section of the pedal arm 41 and the push rod 47 so as to displace the pedal pad 43 in the forward direction of the vehicle. As a result, the displacement of the brake pedal 11 in the backward direction of the vehicle is alleviated and a large space around the foot of the occupant can be secured.

According to the pedal supporting structure of this embodiment, it is not necessary to spread the deformation over the whole pedal bracket 25. A partial deformation of the pedal bracket 25 (front side section 29b) enables the pedal shaft 59 to separate from the pedal bracket 25. Hence, it is not necessary to secure a space for deforming the whole pedal bracket 25 beforehand. The small range of deformation can enhance a degree of freedom in designing components around the pedal bracket 25.

Further, according to the pedal supporting structure of this embodiment, the pedal bracket 25 has a pair of separation slots 61 formed from the intermediate section 29a to the rear side section 29c of the respective side panels 29. When there occurs a relative displacement between the pedal shaft 59 and the pedal bracket 25, these separation slots 61 allow the pedal shaft 59 to reliably separate from the pedal bracket 25.

Further, according to the pedal supporting structure of this embodiment, the male thread section 59a of the pedal shaft 59 penetrates the narrow width sections 61a, 61a of the separation slots 61, 61 and is fastened by the nut 63 together with the slider member 65. This slider member 65 enhances a tightening force on the narrow width section 61a in screwing the nut 63. As a result, when an external force is not applied, no relative displacement occurs between the pedal shaft 59 and the pedal bracket 25 and accordingly the pedal shaft 59 is never separated from the pedal bracket 25.

Further, since the pawl section 65a of the slider member 65 is engaged with the slot section 67 of the pedal bracket 25, an inadvertent occurrence of relative displacement between the pedal shaft 59 and the pedal bracket 25 can be securely prevented in the case where there is no external force applied.

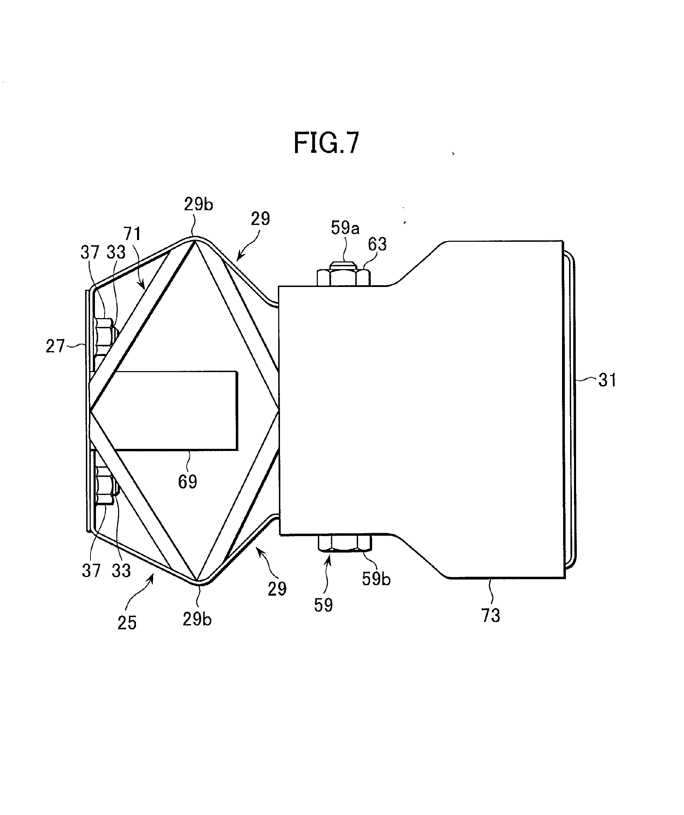

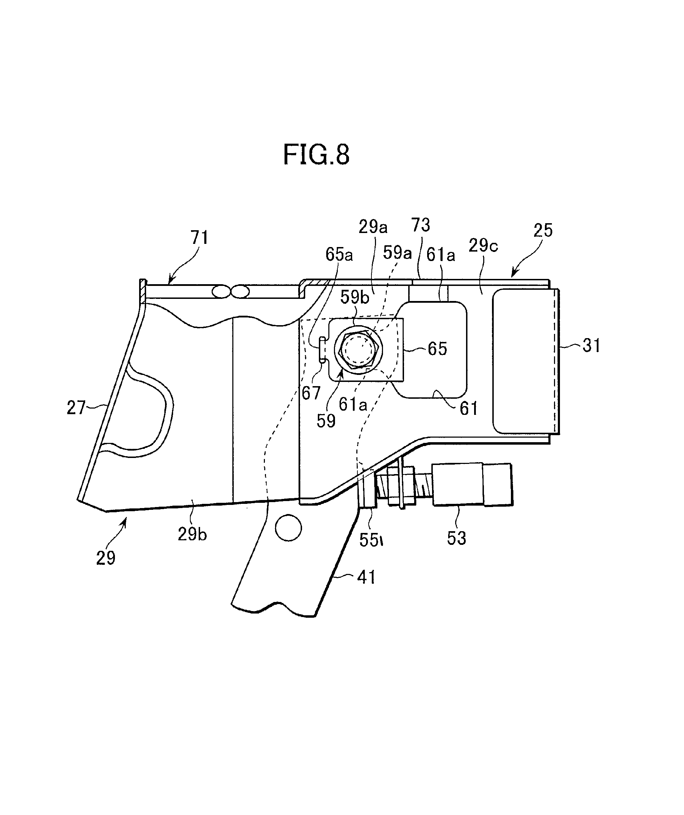

Figs 7 and 8 show a variation of the pedal supporting structure according to the embodiment. There is provided a lozenge member 71 in the front side section 29b of the pedal bracket 25. The lozenge member 71 is constituted by four bar members assembled into a lozenge configuration. The lozenge member 71 is deformed in such a manner that when the length of one diagonal line becomes small, the length of the other diagonal line becomes large. The front top of the longitudinal diagonal line of the lozenge member 71 is connected with the upper end of the front panel 27 of the pedal bracket 25 and the rear top of the longitudinal diagonal line of the lozenge member 71 is connected with the front end of an upper panel 73 of the pedal bracket 25. Respective transverse tops of the lozenge member 71 are connected with a collapsible portion of the front side section 29b.

When an external force larger than a specified value is applied to the front part of the vehicle and the dash panel 17 is displaced in the backward direction of the vehicle, the lozenge member 71 is deformed such that the length of one diagonal line decreases and the length of the other diagonal line increases . As a result, the front side section 29b is more easily and more swiftly deformed at the bent portion receiving the outward force.

Thus, the lozenge member 71 expedites the deformation of the front side section 29b of the pedal bracket 25 and provides the paired front side sections 29b, 29b with a homogeneous deformation. As a result, when an external force is exerted on the front panel 27, the pressure member 69 can reliably press and displace the pedal shaft 59.

While the present invention has been disclosed in terms of the preferred embodiments in order to facilitate better understanding of the invention, it should be appreciated that the invention can be embodied in various ways without departing from the principle of the invention. Therefore, the invention should be understood to include all possible embodiments which can be embodied without departing from the principle of the invention set out in the appended claims.

## Claims

1. A pedal supporting structure for supporting a pedal in a passenger compartment of a vehicle, comprising:
a pedal arm;
a first body member displaceable in a backward direction of said vehicle when an external force larger than a specified value is applied to a front part of said vehicle;
a second body member more resistant to displacement when said external force is applied to said front part of said vehicle;
a pedal bracket secured at a front end thereof to said first body member and secured at a rear portion thereof to said second body member so as to displace said front end with respect to said rear portion;
a pedal shaft attached to said pedal bracket for swingably supporting one end of said pedal arm; and
a pressure member provided in front of said pedal shaft and projecting from said front end of said pedal bracket in a direction of said pedal shaft so as to generate a relative displacement between said pedal shaft and said pedal bracket by pressing said pedal shaft in a backward direction of said vehicle and to disengage said pedal shaft from said pedal bracket when said external force is applied.

2. The pedal supporting structure according to claim 1, wherein said pedal bracket has a collapsible portion in front of said pedal shaft so as to collapse more easily than other parts of said pedal bracket when said external force is applied.

3. The pedal supporting structure according to claim 1 or claim 2, wherein said pedal bracket has a slot through which said pedal shaft is disengaged from said pedal bracket.

4. The pedal supporting structure according to any of claims 1 to 3, wherein said pedal bracket has a pair of flat portions opposite to each other.

5. The pedal supporting structure according to any of claims 1 to 4, further comprising:
a pair of slider members for fixing said pedal shaft on said pedal bracket.

6. The pedal supporting structure according to claim 5, wherein said slider member has a pawl section inserted into a hole section provided on said pedal bracket and said pawl section is deformed and comes out of said hole section by said relative displacement between said pedal shaft and said pedal bracket.

7. The pedal supporting structure according to any of claims 1 to 6, wherein said pedal shaft is a bolt provided across said paired flat portions.

8. The pedal supporting structure according to claim 7, wherein said bolt is fastened by a nut with said paired slider members and said paired portions in between.

9. The pedal supporting structure according to any of claims 1 to 8, further comprising:
a lozenge member formed in a front part of said pedal bracket and constituted such that when the length of one diagonal line decreases, the length of the other diagonal line increases and a top of the widthwise diagonal line is connected with said collapsible portion of said pedal bracket, respectively.

10. A vehicle comprising the pedal supporting structure according to any of claims 1 to 9.
